# EUROPÄISCHE PATENTSCHRIFT

(11) **EP 3 414 137 B1**
(45) Veröffentlichungstag und Bekanntmachung des Hinweises auf die Patenterteilung: **18.03.2020**
(21) Anmeldenummer: 17714657.8
(22) Anmeldetag: 20.03.2017
(51) Int. Cl.: B60T 13/66, B60T 17/22

(54) **BREMSSYSTEM, SCHIENENFAHRZEUG MIT EINEM BREMSSYSTEM SOWIE VERFAHREN ZUM BETRIEB EINES BREMSSYSTEMS**
BRAKE SYSTEM, RAIL VEHICLE HAVING A BRAKE SYSTEM, AND METHOD FOR OPERATING A BRAKE SYSTEM
SYSTÈME DE FREINAGE, VÉHICULE FERROVIAIRE DOTÉ D'UN SYSTÈME DE FREINAGE ET PROCÉDÉ PERMETTANT DE FONCTIONNER UN TEL SYSTÈME DE FREINAGE

(30) Priorität: 29.03.2016 DE 102016205125
(43) Veröffentlichungstag der Anmeldung: 19.12.2018
(73) Patentinhaber: Siemens Mobility GmbH, 81739 München (DE)
(72) Erfinder: LICHTERFELD, Jens Peter, 91058 Erlangen (DE); WERNERT, Harald, 2191 Gaweinstal (AT)
(86) Internationale Anmeldenummer: PCT/EP2017/056482
(87) Internationale Veröffentlichungsnummer: WO 2017/167592

(56) Entgegenhaltungen:
- EP-B1- 2 165 902
- DE-A1-102012 202 761
- US-A- 3 799 623

## Beschreibung

Die Erfindung betrifft ein Bremssystems mit einem ersten Notbremssteuerventilmittel, einem in Wirkverbindung mit zumindest einem ersten Druckluftbremszylinder stehenden ersten Notbremsströmungspfad für vom ersten Notbremssteuerventilmittel ausgesteuerte Druckluft, einer Notfallleitung und einem ersten Umschaltventilmittel, dessen pneumatischer Steueranschluss mit der Notfallleitung verbunden ist, wobei die Notfallleitung bei einem Servicebetrieb des Bremssystems drucklos gehalten ist und bei einem Notfallbetrieb des Bremssystems ein Druck in die Notfallleitung eingesteuert ist, so dass das erste Umschaltventilmittel beim Servicebetrieb in einer ersten Stellung und beim Notfallbetrieb in einer zweiten Stellung gehalten ist.

Die Erfindung betrifft auch ein Schienenfahrzeug mit einem derartigen Bremssystem.

Außerdem betrifft die Erfindung ein Verfahren zum Betrieb eines Bremssystems, welches mit einem ersten Notbremssteuerventilmittel, einem in Wirkverbindung mit zumindest einem ersten Druckluftbremszylinder stehenden ersten Notbremsströmungspfad für vom ersten Notbremssteuerventilmittel ausgesteuerte Druckluft, einer Notfallleitung und einem ersten Umschaltventilmittel, dessen pneumatischer Steueranschluss mit der Notfallleitung (NL) verbunden ist, bereitgestellt wird, wobei die Notfallleitung bei einem Servicebetrieb des Bremssystems drucklos gehalten wird und bei einem Notfallbetrieb des Bremssystems ein Druck in die Notfallleitung eingesteuert wird, so dass das ersten Umschaltventilmittel beim Servicebetrieb in einer ersten Stellung und beim Notfallbetrieb in einer zweiten Stellung gehalten wird.

Ein gattungsgemäßes Bremssystem, ein Schienenfahrzeug mit einem gattungsgemäßen Bremssystem sowie ein gattungsgemäßes Verfahren sind beispielsweise aus der Druckschrift EP 2 165 902 B1 bekannt, wobei das erste Notbremssteuerventilmittel in Form von elektropneumatischen Steuerventilmitteln gebildet ist und wobei das erste Umschaltventilmittel in Form von Druckluftbremsen-Löseventilmitteln, die aus einem oder mehreren pneumatisch betätigten Ventilen aufgebaut sind, ausgebildet ist. Die elektropneumatischen Steuerventilmittel sind dabei zwischen einem Bremsversorgungsbehälter (Bremsdruckbehälter) und einem Druckluftbremszylinder angeschlossen und bewirken, dass der Druckluftbremszylinder mit dem Bremsversorgungsbehälter verbunden ist, wenn sie nicht mit Energie versorgt sind, und dass der Druckluftbremszylinder entlüftet wird, wenn sie mit Energie versorgt sind. Die Druckluftbremsen-Löseventilmittel dienen zum Isolieren des Bremsversorgungsbehälters (Bremsdruckbehälters) von den elektropneumatischen Steuerventilmitteln und zum Entlüften des Druckluftbremszylinders, wenn Druck in der Notfallleitung verfügbar ist, und zum Verbinden des Bremsversorgungsbehälters (Bremsdruckbehälters) mit den elektropneumatischen Steuerventilmitteln, wenn in der Notfallleitung kein Druck verfügbar ist.

Der Erfindung liegt die Aufgabe zu Grunde, den Notfallbetrieb eines gattungsgemäßen Bremssystems zu verbessern, insbesondere zu dem Zweck, ein mit dem Bremssystem ausgestattetes Schienenfahrzeug in einem Notfall besser selbsttätig oder durch ein weiteres Schienenfahrzeug retten - also auf einen sicheren Streckenabschnitt überführen - zu können.

Gelöst wird diese Aufgabe durch ein Bremssystem mit den Merkmalen des Patentanspruches 1, bei dem das erste Umschaltventilmittel derart ausgebildet ist, dass in seiner ersten Stellung der erste Notbremsströmungspfad freigegeben und ein erster Notfallströmungspfad für von einem Notfallsteuerventilmittel ausgesteuerte Druckluft gesperrt ist und dass in seiner zweiten Stellung der erste Notbremsströmungspfad gesperrt und der erste Notfallströmungspfad freigegeben ist.

Bei dem erfindungsgemäße Bremssystem sind somit nicht in allen Wagen eines damit ausgestatteten Schienenfahrzeugs Bedienhandlungen erforderlich um das Schienenfahrzeug zu retten und es müssen auch keine zusätzlichen elektrischen Verbindungen hergestellt werden.

Dabei wird es als vorteilhaft angesehen, wenn das Bremssystem ein zweites Notbremssteuerventilmittel und ein zweites Umschaltventilmittel, dessen pneumatischer Steueranschluss mit der Notfallleitung verbunden ist, aufweist, so dass das zweites Umschaltventilmittel beim Servicebetrieb in einer ersten Stellung und beim Notfallbetrieb in einer zweiten Stellung gehalten ist. Hierbei ist das zweite Umschaltventilmittel derart ausgebildet, dass in seiner ersten Stellung ein in Wirkverbindung mit zumindest einem zweiten Druckluftbremszylinder stehender zweiter Notbremsströmungspfad für vom zweiten Notbremssteuerventilmittel ausgesteuerte Druckluft freigegeben und ein zweiter Notfallströmungspfad für von dem Notfallsteuerventilmittel ausgesteuerte Druckluft gesperrt ist und dass in seiner zweiten Stellung der zweite Notbremsströmungspfad gesperrt und der zweite Notfallströmungspfad freigegeben ist.

Zum Andern wird es als vorteilhaft angesehen, wenn das Bremssystem ein Feststellbremsenlöseventilmittel und ein drittes Umschaltventilmittel, dessen pneumatischer Steueranschluss mit der Notfallleitung verbunden ist, aufweist, so dass es beim Servicebetrieb in einer ersten Stellung und beim Notfallbetrieb in einer zweiten Stellung gehalten ist. Hierbei ist das dritte Umschaltventilmittel derart ausgebildet, dass in seiner ersten Stellung ein in Wirkverbindung mit zumindest einem Feststellbremsenlösezylinder stehender Feststellbremsenlöseströmungspfad für vom Feststellbremsenlöseventilmittel ausgesteuerte Druckluft freigegeben und ein Notfalllöseströmungspfad für von dem Notfallsteuerventilmittel ausgesteuerte Druckluft gesperrt ist und dass in seiner zweiten Stellung der Feststellbremsenlöseströmungspfad gesperrt und der Notfalllöseströmungspfad freigegeben ist.

Vorteilhaft ist es wenn das erste Umschaltventilmittel pneumatische Anschlüsse aufweist, von denen ein erster Anschluss mit einem pneumatischen Anschluss des ersten Notbremssteuerventilmittels verbunden ist und ein zweiter Anschluss in Wirkverbindung mit dem zumindest einen ersten Druckluftbremszylinder steht, und wenn das Notfallsteuerventilmittel einen mit der Notfallleitung verbundenen pneumatischen Steueranschluss einen mit einem Bremsversorgungsbehälter verbundenen pneumatischen Versorgungsanschluss und einen mit einem dritten Anschluss des ersten Umschaltventilmittels verbunden pneumatischen Anschluss aufweist.

In analoger Weise weist das zweites Umschaltventilmittel vorzugsweise pneumatische Anschlüsse aufweist, von denen ein erster Anschluss mit einem pneumatischen Anschluss des zweites Notbremssteuerventilmittels verbunden ist, ein zweiter Anschluss in Wirkverbindung mit dem zumindest einem zweiten Druckluftbremszylinder steht und ein dritter Anschluss mit dem Anschluss des Notfallsteuerventilmittels verbunden ist.

Weiterhin ist vorzugsweise vorgesehen, dass das dritte Umschaltventilmittel pneumatische Anschlüsse aufweist, von denen ein erster Anschluss mit einem pneumatischen Anschluss des Feststellbremsenlöseventilmittels verbunden ist, ein zweiter Anschluss in Wirkverbindung mit dem zumindest einem Feststellbremsenlösezylinder steht ein dritter Anschluss mit dem Anschluss des Notfallsteuerventilmittels verbunden ist.

Vorteilhaft ist der Einsatz eines ersten Druckumsetzers mit einem pneumatischen Versorgungsanschluss, der mit dem Bremsversorgungsbehälter verbunden ist, mit einem Anschluss, der mit dem zumindest einen ersten Druckluftbremszylinder verbunden ist, und mit einem ersten pneumatischen Steueranschluss, der mit dem zweiten pneumatischen Anschluss des ersten Umschaltventilmittels verbunden ist.

Vorteilhaft ist auch der Einsatz eines zweiten Druckumsetzers mit einem pneumatischen Versorgungsanschluss, der mit dem Bremsversorgungsbehälter verbunden ist, mit einem Anschluss, der mit dem zumindest einen ersten Druckluftbremszylinder verbunden ist, und mit einem ersten pneumatischen Steueranschluss, der mit dem zweiten pneumatischen Anschluss des ersten Umschaltventilmittels verbunden ist.

Vorteilhaft ist weiterhin der Einsatz eines erstes Wechselventilmittel mit einem ersten pneumatischen Eingang, einem zweiten pneumatischen Eingang und einem pneumatischen Ausgang, wobei der erste Eingang mit dem Anschluss des ersten Druckumsetzers und der zweite Eingang mit dem Anschluss des zweiten Druckumsetzers verbunden sind.

Vorteilhaft ist ferner der Einsatz ein zweites Wechselventilmittel mit einem ersten pneumatischen Eingang, einem zweiten pneumatischen Eingang und einem pneumatischen Ausgang, wobei der erste Eingang mit dem Ausgang des ersten Wechselventilmittels, der zweite Eingang mit dem zweiten pneumatischen Anschluss des dritten Umschaltventilmittels und der Ausgang mit dem zumindest einen Feststellbremsenlösezylinder verbunden sind.

Vorzugsweise weist das Bremssystem ein Notfalldrucksteuermodul zur Steuerung des Druckes in der Notfallleitung und ein Aktivierungsventilmittel zum Aktivieren des Notfalldrucksteuermoduls auf.

Die der Erfindung zu Grunde liegende Aufgabe wird auch durch ein Verfahren mit den Merkmalen des Patentanspruches 13 gelöst, bei dem das erste Umschaltventilmittel in seiner ersten Stellung den ersten Notbremsströmungspfad freigibt und einen ersten Notfallströmungspfad für von einem Notfallsteuerventilmittel ausgesteuerte Druckluft sperrt und in seiner zweiten Stellung den ersten Notbremsströmungspfad sperrt und den ersten Notfallströmungspfad freigibt.

Zum Einen wird es als Vorteilhaft angesehen, wenn das Bremssystem bereitgestellt wird mit einem zweiten Notbremssteuerventilmittel und einem zweiten Umschaltventilmittel, dessen pneumatischer Steueranschluss mit der Notfallleitung verbunden ist, so dass es beim Servicebetrieb in einer ersten Stellung und beim Notfallbetrieb in einer zweiten Stellung gehalten wird. In seiner ersten Stellung gibt das zweite Umschaltventilmittel einen in Wirkverbindung mit zumindest einem zweiten Druckluftbremszylinder stehenden zweiten Notbremsströmungspfad für vom zweiten Notbremssteuerventilmittel ausgesteuerte Druckluft frei und sperrt einen zweiten Notfallströmungspfad für von dem Notfallsteuerventilmittel ausgesteuerte Druckluft. In seiner zweiten Stellung sperrt das zweite Umschaltventilmittel den zweiten Notbremsströmungspfad und gibt den zweiten Notfallströmungspfad frei.

Zum Andern wird es als vorteilhaft angesehen, wenn das Bremssystem bereitgestellt wird mit einem Feststellbremsenlöseventilmittel und einem dritten Umschaltventilmittel, dessen Steueranschluss mit der Notfallleitung verbunden ist, so dass es beim Servicebetrieb in einer ersten Stellung und beim Notfallbetrieb in einer zweiten Stellung gehalten wird. In seiner ersten Stellung gibt das dritte Umschaltventilmittel einen in Wirkverbindung mit einem Feststellbremsenlösezylinder stehenden Feststellbremsenlöseströmungspfad für vom Feststellbremsenlöseventilmittel ausgesteuerte Druckluft frei und sperrt einen Notfalllöseströmungspfad für von dem Notfallsteuerventilmittel ausgesteuerte Druckluft. In seiner zweiten Stellung sperrt das dritte Umschaltventilmittel den Feststellbremsenlöseströmungspfad und gibt den Notfalllöseströmungspfad frei.

Die Erfindung ist im Weiteren anhand von Figuren näher erläutert. Dabei zeigen die
- Figur 1: eine schematische Darstellung eines Schienenfahrzeugs mit zwei Triebwagen und zwei Laufwagen sowie mit einem erfindungsgemäßen Bremssystem, wobei jeder Triebwagen und jeder Laufwagen des Schienenfahrzeugs mit einer Bremsanordnung des Bremssystems versehen ist, die
- Figur 2: eine der Bremsanordnungen eines Triebwagens, die
- Figur 3: eine der Bremsanordnungen eines Laufwagens.
- Figur 4: einen Ausschnitt einer der Bremsanordnungen, der bei allen Bremssteueranordnungen gleich ausgebildet ist, mit einer Bremsgerätetafel,
- Figur 5: einen weiteren Ausschnitt aus einer Bremssteueranordnung eines der Triebwagen mit einer Notfallbremsausrüstung und
- Figur 6: einen vergrößerten Ausschnitt aus Figur 4.

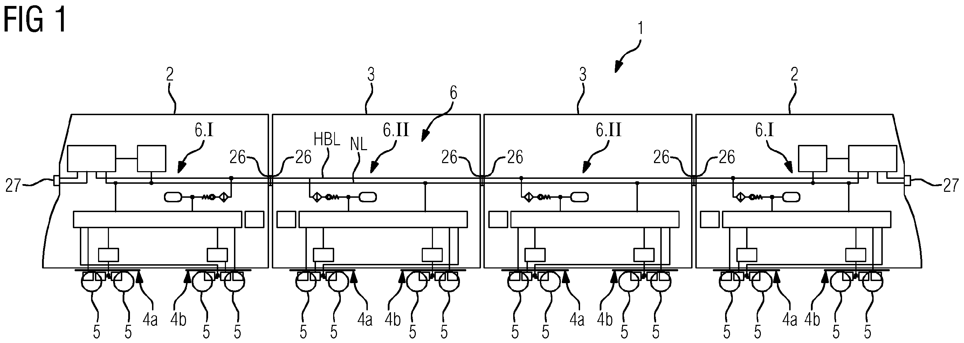

Das in der Figur 1 gezeigte erfindungsgemäße Schienenfahrzeug 1 weist beispielshaft zwei Triebwagen 2 und zwei Laufwagen 3 auf. Die Triebwagen 2 und die Laufwagen 3 weisen jeweils zwei Drehgestelle 4a und 4b auf, wobei jedes der Drehgestelle 4a und 4b mit zwei Radsätzen 5 versehen ist, denen in der Figur 1 nicht gezeigte Bremsaktuatoren zugeordnet sind. Das erfindungsgemäße Schienenfahrzeug 1 ist mit einem Bremssystem 6 versehen. Zu dem Bremssystem 6 gehören eine Hauptluftbehälterleitung HBL (englisch: main air reservoir line) und eine Notfallleitung NL - auch bezeichnet als Rettungsbremsleitung (enlisch: rescue brake pipe). Die Hauptluftbehälterleitung HBL und die Notfallleitung NL verlaufen durch alle Wagen 2 und 3 des Schienenfahrzeugs. Jeder Triebwagen 2 des Schienenfahrzeugs ist mit einer Bremsanordnung 6.I des Bremssystems 6 versehen. Und jeder Laufwagen 3 des Schienenfahrzeugs ist mit einer Bremsanordnung 6.II des Bremssystems 6 versehen.

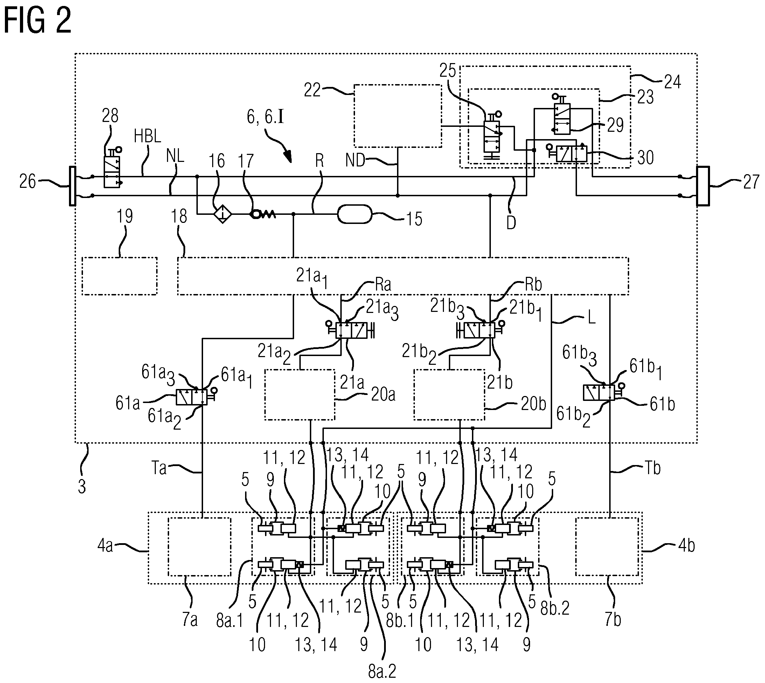

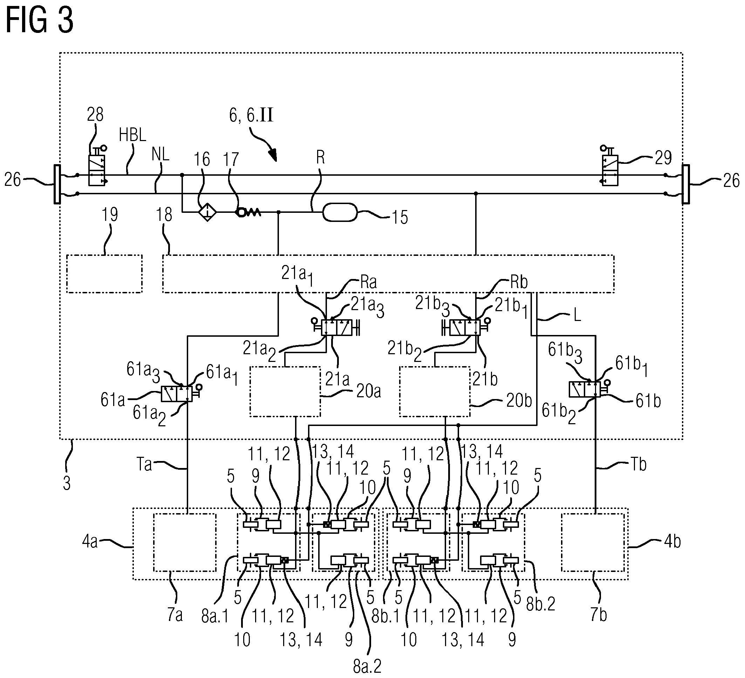

Gemäß den Figuren 2 und 3 umfasst jede der Bremsanordnungen 6.I und 6.II drehgestellseitig je Drehgestell 4a bzw. 4b eine Luftfedereinheit 7a bzw. 7b (englisch: air suspension units) und je Radsatz 5 eine Bremszangenvorrichtung 8a.1, 8a.2, 8b.1 bzw. 8b.2 mit Bremszangeneinheiten 9 und 10 (englisch: brake caliper units). Die Bremszangeneinheiten 9 und 10 umfassen die Bremsaktuatoren, wobei die Bremszangeneinheiten 9 jeweils nur einen Druckluftbremsaktuator 11 mit Druckluftbremszylinder 12 aufweisen und wobei die Bremszangeneinheiten 10 jeweils eine Kombination aus einem einen Druckluftbremsaktuator 11 mit Druckluftbremszylinder 12 und einem Feststellbremsaktuator 13 mit Feststellbremsenlösezylinder 14 aufweisen.

Wagenseitig weist jede der Bremsanordnungen 6.I und 6.II einen Bremsversorgungsbehälter 15 auf, der in der gezeigten Weise über eine aus pneumatischen Leitungsabschnitten gebildete Verbindung, im Zuge derer ein Filter 16 und ein Rückschlagventil 17 angeordnet sind, an die Hauptluftbehälterleitung HBL angeschlossen ist und der einen Bremsversorgungsdruck R bereitstellt.

Weiterhin umfasst jede der Bremsanordnungen 6.I und 6.II wagenseitig eine Bremsgeräteeinheit 18 in Form einer Bremsgerätetafel (englisch: brake panel), eine Antriebs- und Bremssteuereinheit 19 (enlisch: drive and brake unit) in Form einer elektronischen Bremssteuergeräteanordnung, Gleitschutzeinheiten 20a, 20b und Absperreinheiten 21a, 21b sowie 61a, 61b.

Die Antriebs- und Bremssteuereinheit 19 dient unter Anderem zur Ansteuerung von elektrisch ansteuerbaren Komponenten der Bremsgeräteeinheit 18, wobei der Übersichtlichkeit halber die entsprechenden elektrischen Verbindungen in den Figuren nicht dargestellt sind.

Die Bremsgeräteeinheit 18 einer jeweiligen der Bremsanordnungen 6.I und 6.II ist in der gezeigten Weise über pneumatische Leitungsabschnitte mit dem Bremsversorgungsbehälter 15 verbunden, so dass die Bremsgeräteeinheit 18 mit der Druckluft des Bremsversorgungsbehälters 15 - also mit dem Bremsversorgungsdruck R - versorgt wird.

Die Bremsgeräteeinheit 18 einer jeweiligen der Bremsanordnungen 6.I und 6.II ist außerdem in der gezeigten Weise über einen pneumatischen Leitungsabschnitt an die Notfallleitung NL angeschlossen.

Ferner ist die Bremsgeräteeinheit 18 einer jeweiligen der Bremsanordnungen 6.I und 6.II zum Einen über eine erste 21a der Absperreinheiten und eine erste 20a der Gleitschutzeinheiten sowie zugeordnete pneumatische Leitungsabschnitte, die der Übersichtlichkeit halber nicht näher bezeichnet sind, mit den Druckluftbremszylindern 12 der Druckluftbremsaktuatoren 11 eines ersten 4a der Drehgestelle des jeweiligen Wagens verbunden.

Zum Anderen ist die Bremsgeräteeinheit 18 einer jeweiligen der Bremsanordnungen über eine die zweite 21b Absperreinheit und die zweite 20b Gleitschutzeinheit sowie zugeordnete pneumatische Leitungsabschnitte mit den Druckluftbremszylindern 12 der Druckluftbremsaktuatoren 11 des zweiten Drehgestells des jeweiligen Wagens verbunden.

Die Steuerung von Bremsdrücken Ra bzw. Rb für die Druckluftbremsaktuatoren 11 erfolgt also drehgestellweise. Eine derartige drehgestellweise Steuerung ist bevorzugt vorgesehen, wenn das Schienenfahrzeug 1 ein Hochgeschwindigkeitsfahrzeug ist.

Alternativ hierzu kann die Steuerung der Bremsdrücke für die Druckluftbremsaktuatoren wagenweise erfolgen, vorzugsweise wenn das Schienenfahrzeug 1 ein Commuter- oder Regionalfahrzeug ist.

Außerdem ist die Bremsgeräteeinheit 18 einer jeweiligen der Bremsanordnungen über entsprechende pneumatische Leitungsabschnitte mit den Feststellbremsenlösezylindern 14 der Feststellbremsaktuatoren 13 der beiden Drehgestelle 4a und 4b des jeweiligen Wagens verbunden.

Die Steuerung eines Feststellbremsenlösedruckes L für die Feststellbremsenlösezylindern 14 erfolgt also wagenweise.

Jedes der Drehgestelle 4a bzw. 4b ist mit einer der Luftfedereinheiten 7a bzw. 7b versehen, die in der dargestellten Weise über zugeordnete pneumatische Leitungsabschnitte an die Bremsgeräteeinheit 18 des jeweiligen Wagens angeschlossen sind und einen Lastdruck Ta bzw. Tb an die Bremsgeräteeinheit 18 ausgeben.

Gemäß Figur 2 weisen die Bremsgeräteeinheiten 18 der Bremsanordnungen 6.I der Triebwagen 2 jeweils zusätzlich eine Notfallbremsausrüstung auf. Diese Notfallbremsausrüstung umfasst ein Notfalldrucksteuermodul 22 zur Steuerung des Druckes PD in der Notfalleitung NL und - als Bestandteil eines Kabinenmoduls 23 einer Kabinenvorrichtung 24 - ein Aktivierungsmittel 25 zum Aktivieren des Notfalldrucksteuermoduls 22.

Das Aktivierungsmittel 25 weist drei Anschlüsse 25₁, 25₂, 25₃ auf, von denen ein erster Anschluss 25₁ mit der Hauptluftbehälterleitung HBL und ein zweiter Anschluss 25₂ mit dem Notfalldrucksteuermodul 22 verbunden sind und der dritte Anschluss 25₃ mit einer Entlüftung ins Freie versehen ist.

Gemäß den Figuren 1 bis 3 dienen Kopplungsvorrichtungen 26 zum Verbinden der wagenweisen Abschnitte der Hauptluftbehälterleitung HBL und der Notfallleitung NL des Schienenfahrzeugs.

Über eine der in den Figuren 1 und 2 gezeigten Kopplungseinrichtungen 27 ist beispielsweise einerseits die Hauptluftbehälterleitung HBL des Schienenfahrzeugs 1 mit der Hauptluftbehälterleitung eines hier nicht gezeigten weiteren Schienenfahrzeugs und andererseits die Notfallleitung NL des Schienenfahrzeugs 1 mit der Notfallleitung NL des weiteren Schienenfahrzeugs verbindbar. Das erfindungsgemäße Bremssystem bietet den Vorteil, dass es bei einem Abschleppen des Schienenfahrzeugs 1 durch ein weiteres Schienenfahrzeug keine elektrischen Verbindungen zwischen dem Schienenfahrzeug 1 und dem weiteren Schienenfahrzeug geben muss.

Gemäß den Figuren 2 und 3 sind die Enden des sich durch einen Wagen erstreckenden Abschnitts der Hauptluftbehälterleitung HBL mit Absperreinrichtungen 28 bzw. 29 versehen, die den Kopplungseinrichtungen 26 bzw. 27 vorgelagert sind. Dabei ist die Absperreinrichtung 29 des jeweiligen Triebwagens 2 Teil des Kabinenmoduls 23 der Kabinenvorrichtung 24. Außerdem weist das Kabinenmodul 23 eines jeweiligen Triebwagens 2 eine weitere Absperreinrichtung 30 auf, die im Zuge der Notfallleitung NL angeordnet ist.

Im Servicebetrieb des Schienenfahrzeugs 1 befinden sich die Absperreinrichtungen 29, 30 in den in den Figuren 2 und 3 gezeigten ersten Stellungen, so dass einerseits die Hauptluftbehälterleitung HBL an ihren Enden durch die Absperreinrichtungen 29 der beiden Triebwagen 2 geschlossen ist und andererseits die Notfallleitung NL an ihren Enden durch die Absperreinrichtungen 30 der beiden Triebwagen 2 zu den Kopplungseinrichtungen 27 hin offen - und damit ins Freie entlüftet - ist.

Soll sich das Schienenfahrzeug in einem Notfall selbsttätig retten, so müssen zunächst die Absperreinrichtungen 30 der beiden Triebwagen 2 in ihre zweite Stellung überführt werden, um die Notfallleitung NL an ihren Enden zu schließen. Anschließend muss das Aktivierungsmittel 25 eines der Triebwagen 2 (vorzugsweise des in Fahrtrichtung führenden Triebwagens) aus seiner in den Figuren gezeigten Sperrstellung in seine Aktivierungsstellung überführt werden. Bei der Sperrstellung sind die Anschlüsse 25₂ und 25₃ verbunden und damit das Notfalldrucksteuermodul 22 ins Freie entlüftet. Bei der Aktivierungsstellung leitet das Aktivierungsmittel 25 den Druck D der Hauptluftbehälterleitung HBL in Richtung des Notfalldrucksteuermoduls 22 weiter, da sein Anschluss 25₁ mit seinem Anschluss 25₂ verbunden ist.

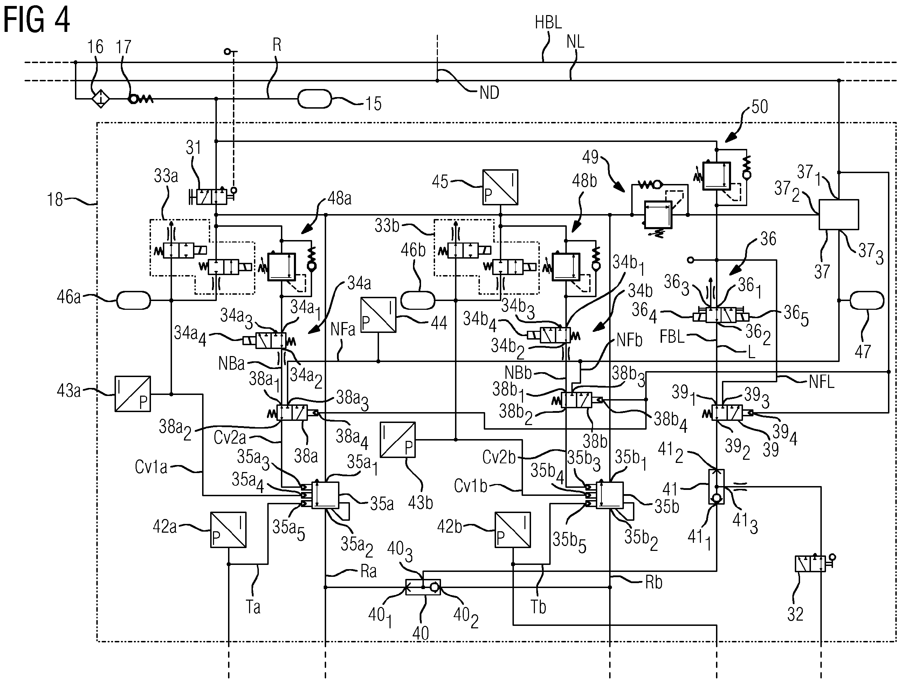

Gemäß Figur 4 umfasst eine jede der Bremsgeräteeinheiten 18 zwei Absperreinrichtung 31 und 32, zwei direkt wirkende Bremsdruckregler 33a und 33b, zwei direkt wirkende Notbremssteuerventilmittel 34a und 34b, zwei als Druckumsetzer 35a und 35b wirkende Relaisventilmittel, ein Feststellbremsenlöseventilmittel 36, ein Notfallsteuerventilmittel 37 in Form einer indirekt wirkenden Bremsdrucksteuerung, drei Umschaltventilmittel 38a, 38b und 39, zwei Wechselventilmittel 40 und 41 und den Luftfedereinheiten 7a bzw. 7b zugeordnete Drucksensoren 42a bzw. 42b. Darüber hinaus umfasst jede der Bremsgeräteeinheiten 18 weitere Elemente, von denen der Übersichtlichkeit halber in der Figur 3 nicht alle gezeigt sind. Zu diesen weiteren Elementen zählen weitere Drucksensoren 43a, 43b, 44, 45, Druckluftbehälter 46a, 46b, 47 Druckminderventilmittel 48a, 48b, 49, 50 und auch Druckschalter.

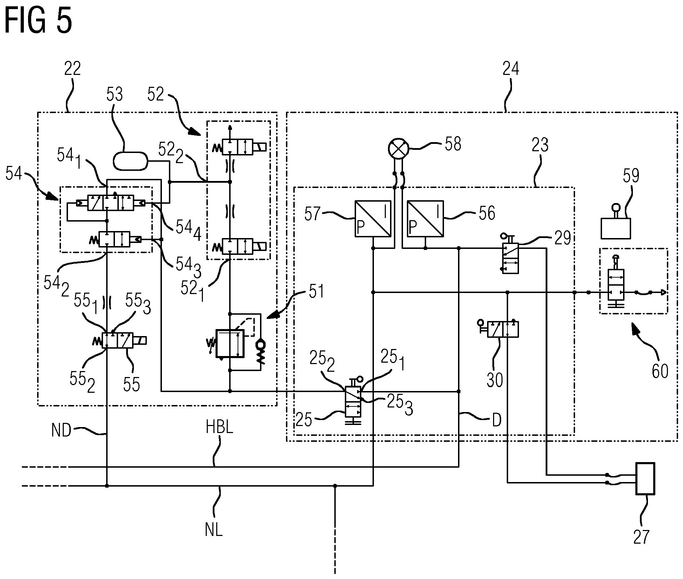

Gemäß Figur 5 weist das Notfalldrucksteuermodul 22 der Notfallbremsausrüstung der Triebwagen 2 ein Druckminderventilmittel 51, einen Druckregler 52 mit Belüftungsventil und Entlüftungsventil einen Druckluftbehälter 53, ein als Druckumsetzer 54 wirkendes Relaisventilmittel sowie ein elektrisch betätigbarer Notbremsventilmittel 55 auf.

Das Kabinenmodul 23 weist zusätzlich zu dem Aktivierungsmittel 25 und den Absperreinrichtungen 29 und 30 zwei Drucksensoren 56 und 57 auf.

Zu der Kabinenvorrichtung 24 gehören neben dem Kabinenmodul 23 ein Doppelmanometer 58, ein Fahr- und Bremsregler 59 und ein Notbremstaster 60.

Im Folgenden wird die in der Figur 4 gezeigte Bremsgeräteeinheit 18 näher beschrieben.

Bei der Bremsgeräteeinheit 18 sind mittels eines ersten 35a der Druckumsetzer Wirkverbindungen von einem ersten 38a der Umschaltventilmittel zu den Druckluftbremszylindern 12 des ersten Drehgestells 4a gebildet. Mittels des zweiten Druckumsetzer 35b sind Wirkverbindungen von dem zweiten Umschaltventilmittel 38b zu den Druckluftbremszylindern 12 des zweiten Drehgestells 4b gebildet.

Zusätzlich sind mittels des ersten Druckumsetzer 35a und eines ersten 40 der Wechselventilmittel Wirkverbindungen von dem ersten Umschaltventilmittel 38a zu den Druckluftbremszylindern 12 des zweiten Drehgestells 4b und mittels des zweiten Druckumsetzer 35b und des ersten Wechselventilmittels 40 Wirkverbindungen von einem zweiten 38b der Umschaltventilmittel zu den Druckluftbremszylindern 12 des ersten Drehgestells 4a gebildet.

Außerdem sind mittels des zweiten Wechselventilmittels 41 Wirkverbindungen von dem dritten Umschaltventilmittel 39 zu den Feststellbremsenlösezylindern 14 der beiden Drehgestelle 4a und 4b des jeweiligen Wagens gebildet.

Ferner sind mittels der beiden Druckumsetzer 35a, 35b und der beiden Wechselventilmittel 40, 41 Wirkverbindungen von dem ersten Umschaltventilmittel 38a und dem zweiten Umschaltventilmittel 38b zu den Feststellbremsenlösezylindern 14 der beiden Drehgestelle 4a und 4b des jeweiligen Wagens gebildet.

Zur Ausbildung der genannten Wirkverbindungen weist der erste Druckumsetzer 35a einen mit dem Bremsversorgungsbehälter 15 verbundenen pneumatischen Versorgungsanschluss 35a₁, einen pneumatischen Anschluss 35a₂ und drei pneumatische Steueranschlüsse 35a₃, 35a₄, 35a₅ auf. An dem pneumatischen Anschluss 35a₂ gibt der Druckumsetzer 35a den Bremsdruck Ra aus. Hierbei ist der pneumatischen Anschluss 35a₂ über pneumatische Leitungsabschnitte mit dem ersten Anschluss 21a₁ der Absperreinheit 21a verbunden, welcher in der in den Figuren 2 und 3 gezeigten Offenstellung der Absperreinheit 21a mit dem Anschluss 21a₂ und von dort gemäß den Figuren 2 und 3 über die Gleitschutzeinheit 20a mit den Druckluftbremszylindern 12 des ersten Drehgestells 4a des jeweiligen Wagens verbunden ist.

Entsprechend weist der zweite Druckumsetzer 35b einen mit dem Bremsversorgungsbehälter 15 verbundenen pneumatischen Versorgungsanschluss 35b₁, einen pneumatischen Anschluss 35b₂ und drei pneumatische Steueranschlüsse 35b₃, 35b₄, 35b₅ auf. An dem pneumatischen Anschluss 35b₂ gibt der Druckumsetzer 35b den Bremsdruck Rb aus. Hierbei ist der pneumatische Anschluss 35b₂ über pneumatische Leitungsabschnitte mit dem ersten Anschluss 21b₁ der Absperreinheit 21b verbunden, welcher in der in den Figuren 2 und 3 gezeigten Offenstellung der Absperreinheit 21b mit dem Anschluss 21b₂ und von dort gemäß den Figuren 2 und 3 über die Gleitschutzeinheit 20a mit den Druckluftbremszylindern 12 des Drehgestells 4b des jeweiligen Wagens verbunden ist.

Das erstes Wechselventilmittel 40 weist einen ersten pneumatischen Eingang 40₁, einen zweiten pneumatischen Eingang 40₂ und einem pneumatischen Ausgang 40₃ auf, wobei der erste Eingang 40₁ mit dem zweiten Anschluss 35a₂ des ersten Druckumsetzers 35a und der zweite Eingang 40₂ mit dem zweiten Anschluss 35b₂ des zweiten Druckumsetzers 35b verbunden sind.

Das zweites Wechselventilmittel 41 weist einen ersten pneumatischen Eingang 41₁, einem zweiten pneumatischen Eingang 41₂ und einem pneumatischen Ausgang 41₃ auf, wobei der erste Eingang 41₁ mit dem Ausgang 40₃ des ersten Wechselventilmittels 40, der zweite Eingang 41₂ mit dem zweiten pneumatischen Anschluss 39₂ des dritten Umschaltventilmittels 39 und der Ausgang 41₃ mit den Feststellbremsenlösezylindern 14 der beiden Drehgestelle 4a, 4b verbunden sind.

Ein erstes der Notbremsventilmittel 34a weist einen pneumatischen Versorgungsanschluss 34a₁, einen pneumatischen Anschluss 34a₂ und einen Entlüftungsanschluss 34a₃ auf. Außerdem weist das erste Notbremsventilmittel 34a einen von der Antriebs- und Bremssteuereinheit 19 angesteuerten elektrischen Steueranschluss 34a₄ auf.

Das zweite Notbremsventilmittel 34b weist einen pneumatischen Versorgungsanschluss 34b₁, einen pneumatischen Anschluss 34b₂ und einen Entlüftungsanschluss 34b₃ auf. Außerdem weist das zweite Notbremsventilmittel 34b einen von der Antriebs- und Bremssteuereinheit 19 angesteuerten elektrischen Steueranschluss 34b₄ auf.

Weiterhin weist das Feststellbremsenlöseventilmittel 36 einen pneumatischen Versorgungsanschluss 36₁, einen pneumatischen Anschluss 36₂ und einen Entlüftungsanschluss 36₃ auf. Außerdem weist das Feststellbremsenlöseventilmittel 36 zwei elektrisch angesteuerte Steueranschlüsse 36₄ und 36₅ auf.

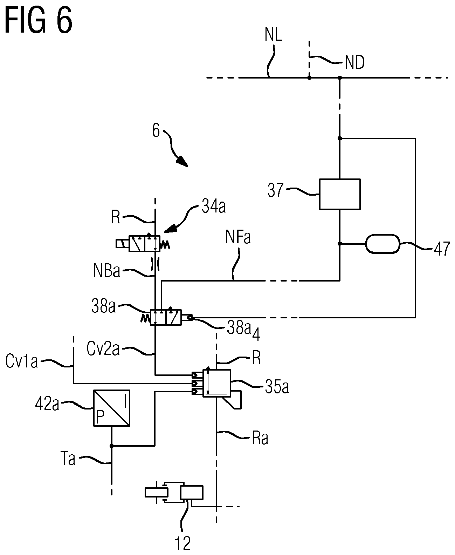

Durch pneumatische Leitungsabschnitte ist ein erster Notbremsströmungspfad NBa für von dem ersten Notbremssteuerventilmittel 34a ausgesteuerte Druckluft ausgebildet (siehe auch Figur 6). Der Notbremsströmungspfad NBa erstreckt sich vom Anschluss 34a₂ des ersten Notbremssteuerventilmittels 34a zu einem ersten 35a₃ der Steueranschlüsse des ersten Druckumsetzers 35a erstreckt.

Dieser erste Notbremsströmungspfad NBa steht somit mittels des ersten Druckumsetzers 35a in Wirkverbindung mit den Druckluftbremszylindern 12 des ersten Drehgestells 4a des jeweiligen Wagens.

Dieser erste Notbremsströmungspfad NBa steht außerdem mittels des ersten Druckumsetzers 35a und des ersten Wechselventilmittels 40 auch in Wirkverbindung mit den Druckluftbremszylindern 12 des zweiten Drehgestells 4b des jeweiligen Wagens.

Weiterhin ist durch pneumatische Leitungsabschnitte ein erster Notfallströmungspfad NFa für von dem Notfallsteuerventilmittel 37 ausgesteuerte Druckluft ausgebildet(siehe auch Figur 6).

Das Notfallsteuerventilmittel 37 weist einen mit der Notfallleitung NL verbundenen pneumatischen Steueranschluss 37₁, einen über eines 49 der Druckminderventilmittel mit dem Bremsversorgungsbehälter 15 verbundenen pneumatischen Versorgungsanschluss 37₂ und einen Anschluss 37₃ auf, wobei sich der Notfallströmungspfad NFa von dem Anschluss 37₃ des Notfallsteuerventilmittels 37 zum ersten Steueranschluss 35a₃ des ersten Druckumsetzers 35a erstreckt.

Der erste Notfallströmungspfad NFa steht mittels des ersten Druckumsetzers 35a ebenfalls in Wirkverbindung mit den Druckluftbremszylindern 12 des ersten Drehgestells 4a des jeweiligen Wagens bzw. mittels des ersten Druckumsetzers 35a und des ersten Wechselventilmittels 40 in Wirkverbindung mit den Druckluftbremszylindern 12 des zweiten Drehgestells 4b.

Im Zuge des ersten Notbremsströmungspfades NBa und des ersten Notfallströmungspfades NFa ist ein erstes 38a der Umschaltventilmittel angeordnet, welches pneumatische Anschlüsse 38a₁, 34a₂, 34a₃ aufweist. Ein erster 38a₁ der Anschlüsse ist mit dem pneumatischen Anschluss 34a₂ des ersten Notbremssteuerventilmittels 34a verbunden. Ein zweiter 38a₂ der Anschlüsse ist mit dem Steueranschluss 35a₃ des Druckumsetzers 35a verbunden und steht somit in Wirkverbindung mit den Druckluftbremszylindern 12 des ersten Drehgestells 4a eines jeweiligen Wagens. Außerdem weist das erstes Umschaltventilmittel 38a einen mit der Notfallleitung NL verbundenen pneumatischen Steueranschluss 38a₄ auf.

Bei einem Servicebetrieb des Bremssystems 6, ist die Notfallleitung NL drucklos (PD=0) gehalten, so dass das erste Umschaltventilmittel 38a in einer ersten Stellung (wie in Figur 4 gezeigt) gehalten ist.

Bei einem Notfallbetrieb des Bremssystems 6 ist ein Druck PD≠0 in die Notfallleitung (NL) eingesteuert, so dass das erste Umschaltventilmittel 38a in einer zweiten Stellung gehalten ist.

Das erste Umschaltventilmittel 38a ist derart ausgebildet, dass in seiner ersten Stellung der erste Notbremsströmungspfad NBa freigegeben sowie der erste Notfallströmungspfad NFa gesperrt ist und dass in seiner zweiten Stellung der erste Notbremsströmungspfad (NBa gesperrt und der erste Notfallströmungspfad NFa freigegeben ist.

In gleicher Weise ist bei der Bremsgeräteeinheit 18 durch pneumatische Leitungsabschnitte ein zweiter Notbremsströmungspfad NBb für von dem zweiten Notbremssteuerventilmittel 34b ausgesteuerte Druckluft ausgebildet, der sich vom Anschluss 34b₂ des zweiten Notbremssteuerventilmittels 34b zu einem ersten 35b₃ der Steueranschlüsse des zweiten Druckumsetzers 35b erstreckt.

Dieser zweite Notbremsströmungspfad NBb steht somit mittels des zweiten Druckumsetzers 35b in Wirkverbindung mit den Druckluftbremszylindern 12 des zweiten Drehgestells 4b des jeweiligen Wagens.

Dieser zweite Notbremsströmungspfad NBb steht außerdem mittels des zweiten Druckumsetzers 35a und des ersten Wechselventilmittels 40 auch in Wirkverbindung mit den Druckluftbremszylindern 12 des ersten Drehgestells 4a des jeweiligen Wagens.

Weiterhin ist durch pneumatische Leitungsabschnitte ein zweiter Notfallströmungspfad NFa für von einem Notfallsteuerventilmittel 37 ausgesteuerte Druckluft ausgebildet, der sich vom Anschluss 37₃ des Notfallsteuerventilmittels 37 zum Anschluss 35b₃ des zweiten Druckumsetzers 35b erstreckt.

Dieser zweite Notfallströmungspfad NFb steht mittels des zweiten Druckumsetzers 35b ebenfalls in Wirkverbindung mit den Druckluftbremszylindern 12 des zweiten Drehgestells 4b des jeweiligen Wagens bzw. mittels des zweiten Druckumsetzers 35b und des ersten Wechselventilmittels 40 in Wirkverbindung mit den Druckluftbremszylindern 12 des ersten Drehgestells 4a.

Im Zuge des zweiten Notbremsströmungspfades NBb und des zweiten Notfallströmungspfades NFb ist das zweite Umschaltventilmittel 38b angeordnet, welches pneumatische Anschlüsse 38b₁, 34b₂, 34b₃ aufweist. Ein erster 38b₁ der Anschlüsse ist mit dem pneumatischen Anschluss 34b₂ des zweiten Notbremssteuerventilmittels 34b verbunden. Ein zweiter 38b₂ der Anschlüsse ist mit dem Steueranschluss 35b₃ des zweiten Druckumsetzers 35b verbunden und steht somit in Wirkverbindung mit den Druckluftbremszylindern 12 des zweiten Drehgestells 4b eines jeweiligen Wagens. Außerdem weist das zweite Umschaltventilmittel 38b einen mit der Notfallleitung NL verbundenen pneumatischen Steueranschluss 38b₄ auf.

Beim Servicebetrieb des Bremssystems 6 ist das zweite Umschaltventilmittel 38b aufgrund der drucklosen (PD=0) Notfallleitung in einer ersten Stellung (wie in Figur 4 gezeigt) gehalten.

Beim Notfallbetrieb des Bremssystems 6 das zweite Umschaltventilmittel 38b aufgrund des in die Notfallleitung NL eingesteuerten Druckes PD≠0 in einer zweiten Stellung gehalten.

Das zweite Umschaltventilmittel 38b ist derart ausgebildet, dass in seiner ersten Stellung der zweite Notbremsströmungspfad NBb freigegeben sowie der zweite Notfallströmungspfad NFb gesperrt ist und dass in seiner zweiten Stellung der zweite Notbremsströmungspfad NBb gesperrt und der zweite Notfallströmungspfad NFb freigegeben ist.

Außerdem ist bei der Bremsgeräteeinheit 18 durch pneumatische Leitungsabschnitte ein Feststellbremsenlöseströmungspfad FBL für von dem Feststellbremsenlöseventilmittel 36 ausgesteuerte Druckluft ausgebildet, der sich vom Anschluss 36₂ des Feststellbremsenlöseventilmittels 36 zum Anschluss 41₂ des zweiten Wechselventilmittels 41 erstreckt. Der Feststellbremsenlöseströmungspfad FBL steht mittels des zweiten Wechselventilmittels 41 in Wirkverbindung mit den Feststellbremsenlösezylindern 14 der beiden Drehgestelle 4a und 4b des jeweiligen Wagens.

Weiterhin ist durch pneumatische Leitungsabschnitte ein Notfalllöseströmungspfad NFL für von dem Notfallsteuerventilmittel 37 ausgesteuerte Druckluft ausgebildet, der sich vom Anschluss 37₃ des Notfallsteuerventilmittels 37 zum Anschluss 41₂ des zweiten Wechselventilmittels 41 erstreckt. Dieser Notfalllöseströmungspfad NFL steht mittels des Wechselventilmittels 41 ebenfalls in Wirkverbindung mit den Feststellbremsenlösezylindern 14 der beiden Drehgestelle 4a und 4b des jeweiligen Wagens.

Im Zuge des Feststellbremsenlöseströmungspfades FBL und des Notfalllöseströmungspfades NFL ist das dritte Umschaltventilmittel 39 angeordnet welches pneumatische Anschlüsse 39₁, 39₂, 39₃ aufweist. Ein erster 39₁ der Anschlüsse ist mit dem pneumatischen Anschluss 36₂ des Feststellbremsenlöseventilmittels 36 verbunden. Ein zweiter 39₂ der Anschlüsse ist mit dem Anschluss 41₂ des zweiten Wechselventilmittels 41 verbunden und steht somit in Wirkverbindung mit den Druckluftbremszylindern 12 der beiden Drehgestelle 4a, 4b eines jeweiligen Wagens. Außerdem weist das dritte Umschaltventilmittel 39 einen mit der Notfallleitung NL verbundenen pneumatischen Steueranschluss 39₄ auf.

Beim Servicebetrieb des Bremssystems 6 ist das dritte Umschaltventilmittel 39 aufgrund der drucklosen (PD=0) Notfallleitung in einer ersten Stellung (wie in Figur 4 gezeigt) gehalten.

Beim Notfallbetrieb des Bremssystems 6 das dritte Umschaltventilmittel 39 aufgrund des in die Notfallleitung NL eingesteuerten Druckes PD≠0 in einer zweiten Stellung gehalten.

Das dritte Umschaltventilmittel 39 ist derart ausgebildet, dass in seiner ersten Stellung der Feststellbremsenlöseströmungspfades FBL freigegeben sowie der Notfalllöseströmungspfades NFL gesperrt ist und dass in seiner zweiten Stellung der Feststellbremsenlöseströmungspfades FBL gesperrt und der Notfalllöseströmungspfades NFL freigegeben ist.

Im Folgenden ist beschrieben, wie das Bremssystem 6 arbeitet.

Die direkt wirkenden Bremsdruckregler 33a bzw. 33b sind jeweils aus einem Belüftungsventil und einem Entlüftungsventil gebildet, wobei die Belüftungsventile und die Entlüftungsventile von der Antriebs- und Bremssteuereinheit 19 elektrisch angesteuert sind.

Die direkt wirkenden Bremsdruckregler 33a bzw. 33b steuern im normalen Servicebetrieb bei einer Betriebsbremsung und auch bei einer Notbremsung einen Vorsteuerdruck Cv1a≠0 bzw. Cv1b≠0 an einen zweiten 35a₄ bzw. 35b₄ der Steueranschlüsse der Druckumsetzer 35a bzw. 35b aus. Im Notfallbetrieb nehmen die beiden Bremsdruckregler 33a bzw. 33b die in der Figur 4 gezeigte Stellung ein, so dass die Steuereingänge 35a₄ bzw. 35b₄ der Druckumsetzer 35a und 35b ins Freie entlüftet werden (Cv1a=0, Cv1b=0).

Die direkt wirkenden Notbremssteuerventilmittel 34a und 34b, die nur von einer hier nicht gezeigten Sicherheitsschleife elektrisch angesteuert werden, sind im normalen Servicebetrieb des Bremssystems 6 bei geschlossener Sicherheitsschleife bestromt, so dass die ersten Steuereingänge 35a₃ bzw. 35b₃ der Druckumsetzer 35a und 35b ins Freie entlüftet werden (Cv2a=0, Cv2b=0).

Wird die Sicherheitsschleife für eine Notbremsung unterbrochen, so steuern die beiden Notbremssteuerventilmittel 34a und 34b Vorsteuerdrücke Cv2a≠0 bzw. Cv2b≠0 an die ersten Steuereingänge 35a₃ bzw. 35b₃ der Druckumsetzer 35a und 35b aus. Die Stellung der Notbremssteuerventilmittel 34a und 34b bei einer Notbremsung, ist in der Figur 4 gezeigt.

An den dritten Steuereingängen 35a₅ bzw. 35b₅ der Druckumsetzer 35a bzw. 35b liegen die Lastdrücke Ta bzw. Tb der Luftfedereinheiten 7a bzw. 7b als Vorsteuerdrücke an, die als ein Maß für den Beladungszustand des Schienenfahrzeugs 1 dienen.

Die Druckumsetzer 35a und 35b steuern in Abhägigkeit der an Ihren Steuereingängen anliegenden Vorsteuerdrücke Cv1a, Cv2a, Ta bzw. Cv1b, Cv2b, Tb an dem Anschluss 35a₂ bzw. 35b₂ den Bremsdruck Ra bzw. Rb an die Druckluftbremszylinder 12 aus. Sind Ra=0 und Rb=0, so befinden sich die Druckluftbremsaktuatoren 11 in Gelöststellung. Sind Ra≠0 und Rb≠0, so befinden sich die Druckluftbremsaktuatoren 11 in einer Bremsstellung.

Im normalen Servicebetrieb des Bremssystems 6 erfolgt eine Feststellbremsung (Parkbremsung) mittels des Feststellbremsenlöseventilmittels 36.

Bei der in der Figur 4 gezeigten Stellung des Feststellbremsenlöseventilmittels 36 steuert dieses an seinem Anschluss 36₂ den Feststellbremsenlösedruck L≠0 an die Feststellbremsenlösezylinder 14 aus, so dass die Feststellbremsaktuatoren 13 entgegen der Kraft ihrer Federn in Lösestellung gehalten sind. In der Stellung, in der das Feststellbremsenlöseventilmittel 36 die Feststellbremsenlösezylinder 14 ins Freie entlüftet (L=0), werden die Feststellbremsaktuatoren 13 unter der Kraft ihrer Federn in Bremsstellung gehalten.

Die Wechselventilmittel 40 und 41 verhindern, dass sich die Druckluftbremsaktuatoren 11 und die Feststellbremsaktuatoren 13 zeitgleich in ihrer Bremsstellung befinden.

Damit sich das Schienenfahrzeug in einem Notfall (Rettungsfall) selbst retten kann, muss es in den Notfallbetrieb überführt werden. Hierzu muss die Absperreinrichtung 30 in den beiden Triebwagen aus der in den Figuren 2 und 5 gezeigten ersten Stellung in ihre zweite Stellung überführt werden, so dass die Notfallleitung NL an beiden Enden abgesperrt ist und somit durch das Notfalldrucksteuermodul 22 der Druck PD in der Notfallleitung NL aufgebaut werde kann. Außerdem muss das Aktivierungsmittel 25 manuell aus der in den Figuren 2 und 5 gezeigten Sperrstellung in seine Aktivierungsstellung überführt werden, so dass dieses den Druck D in der Hauptluftbehälterleitung als Versorgungsdruck an einen ersten Anschluss 52₁ des Druckreglers 52 und an einen ersten Anschluss 54₁ des Druckumsetzers 54 sowie als einen Vorsteuerdruck an einen Steueranschluss 54₃ des Druckumsetzers 54 durchlässt. Der Druckregler 52, der vom Fahr- und Bremsregler 59 gesteuert ist, steuert an einem zweiten Anschluss 52₂ einen weiteren Vorsteuerdruck an einen weiteren Steueranschluss 54₄ des Druckumsetzers 54 aus. Der Druckumsetzer 54 steuert in Abhängigkeit der beiden Vorsteuerdrücke, die an seinen Steueranschlüssen 54₃ und 54₄ anliegen, an einem zweiten Anschluss 54₂ den Druck ND in die Notfallleitung NL.

Durch den in die Notfallleitung NL eingesteuerten Druck ND werden zum Einen die Steueranschlüsse 38a₃, 38b₃ und 39₃ angesteuert und somit aus ihrer ersten Stellung in ihre zweite Stellung überführt, wobei in der zweiten Stellung ersten Notbremsströmungspfade NBa und NBb sowie der Feststellbremsenlöseströmungspfad FBL gesperrt sind, während die Notfallströmungspfade NFa und NFb sowie der Notfalllöseströmungspfad (NFL) freigegeben sind. Zum Anderen wird das Notfallsteuerventilmittels 37 durch den Druck ND in der Notfallleitung gesteuert. Die Umschaltung in die zweite Stellung erfolgt, sobald der Druck ND in der Notfalleitung 2,5 übersteigt. Dann sind die "low-aktiven" Notbremssteuerventilmittel 34a und 34b sowie das Feststellbremsenlöseventilmittel 36 durch die pneumatischen Umschaltventilmittel 38a, 38b und 39 deaktiviert.

Sobald der Druck ND in der Notfalleitung 5 bar erreicht sind alle Druckluftbremsaktuatoren 11 und alle Feststellbremsaktuatoren 13 in ihre Lösestellung überführt - also gelöst.

In dem Notfall kann das Schienenfahrzeug nun stufenlos abgebremst werden, indem der Druck ND in der Notfallleitung auf 4,6 bis 3,5 bar abgesenkt wird.

Außerdem ist auch im Notfall eine Notbremsung möglich. Hierzu muss die Notfallleitung entlüftet werden, was durch ein Betätigen des elektrisch betätigbaren Notbremsventilmittels 55 oder durch ein manuelles Betätigen des Notbremstasters 60 erfolgen kann.

## Patentansprüche

1. Bremssystems (6) mit einem ersten Notbremssteuerventilmittel (34a), einem in Wirkverbindung mit zumindest einem ersten Druckluftbremszylinder (12) stehenden ersten Notbremsströmungspfad (NBa) für vom ersten Notbremssteuerventilmittel (34a) ausgesteuerte Druckluft, einer Notfallleitung (NL) und einem ersten Umschaltventilmittel (38a), dessen pneumatischer Steueranschluss (38a₄) mit der Notfallleitung (NL) verbunden ist,
wobei die Notfallleitung (NL) bei einem Servicebetrieb des Bremssystems (6) drucklos (ND=0) gehalten ist und bei einem Notfallbetrieb des Bremssystems (6) ein Druck (ND≠0) in die Notfallleitung (NL) eingesteuert ist, so dass das erste Umschaltventilmittel (38a) beim Servicebetrieb in einer ersten Stellung und beim Notfallbetrieb in einer zweiten Stellung gehalten ist,
**dadurch gekennzeichnet, dass**
das erste Umschaltventilmittel (38a) derart ausgebildet ist, dass in seiner ersten Stellung der erste Notbremsströmungspfad (NBa) freigegeben und ein erster Notfallströmungspfad (NFa) für von einem Notfallsteuerventilmittel (37) ausgesteuerte Druckluft gesperrt ist und dass in seiner zweiten Stellung der erste Notbremsströmungspfad (NBa) gesperrt und der erste Notfallströmungspfad (NFa) freigegeben ist.

2. Bremssystem (6) nach Anspruch 1
**gekennzeichnet, durch**
ein zweites Notbremssteuerventilmittel (34b) und ein zweites Umschaltventilmittel (38b), dessen pneumatischer Steueranschluss (38b₄) mit der Notfallleitung (NL) verbunden ist, so dass es beim Servicebetrieb in einer ersten Stellung und beim Notfallbetrieb in einer zweiten Stellung gehalten ist,
wobei das zweite Umschaltventilmittel (38b) derart ausgebildet ist, dass in seiner ersten Stellung ein in Wirkverbindung mit zumindest einem zweiten Druckluftbremszylinder (12) stehender zweiter Notbremsströmungspfad (NBb) für vom zweiten Notbremssteuerventilmittel (34b) ausgesteuerte Druckluft freigegeben und ein zweiter Notfallströmungspfad (NFb) für von dem Notfallsteuerventilmittel (37) ausgesteuerte Druckluft gesperrt ist und dass in seiner zweiten Stellung der zweite Notbremsströmungspfad (NBb) gesperrt und der zweite Notfallströmungspfad (NFb) freigegeben ist.

3. Bremssystem (6) nach einem der Ansprüche 1 oder 2
**gekennzeichnet, durch**
ein Feststellbremsenlöseventilmittel (36) und ein drittes Umschaltventilmittel (39), dessen pneumatischer Steueranschluss (39₄) mit der Notfallleitung (NL) verbunden ist, so dass es beim Servicebetrieb in einer ersten Stellung und beim Notfallbetrieb in einer zweiten Stellung gehalten ist,
wobei das dritte Umschaltventilmittel (39) derart ausgebildet ist, dass in seiner ersten Stellung ein in Wirkverbindung mit zumindest einem Feststellbremsenlösezylinder (14) stehender Feststellbremsenlöseströmungspfad (FBL) für vom Feststellbremsenlöseventilmittel (36) ausgesteuerte Druckluft freigegeben und ein Notfalllöseströmungspfad (NFL) für von dem Notfallsteuerventilmittel (37) ausgesteuerte Druckluft gesperrt ist und dass in seiner zweiten Stellung der Feststellbremsenlöseströmungspfad gesperrt und der dritte Notfalllöseströmungspfad freigegeben ist.

4. Bremssystem (6) nach einem der Ansprüche 1 bis 3
**dadurch gekennzeichnet,**
**dass** das erste Umschaltventilmittel (38a) pneumatische Anschlüsse aufweist, von denen ein erster Anschluss (38a₁) mit einem pneumatischen Anschluss (34a₂) des ersten Notbremssteuerventilmittels (34a) verbunden ist und ein zweiter Anschluss (38a₂) in Wirkverbindung mit dem zumindest einen ersten Druckluftbremszylinder (12) steht, und
**dass** das Notfallsteuerventilmittel (37) einen mit der Notfallleitung (NL) verbundenen pneumatischen Steueranschluss (37₁), einen mit einem Bremsversorgungsbehälter (15) verbundenen pneumatischen Versorgungsanschluss (37₂) und einen mit einem dritten Anschluss (38a₃) des ersten Umschaltventilmittels (38a) verbunden pneumatischen Anschluss (37₃) aufweist.

5. Bremssystem (6) nach einem der Ansprüche 2 bis 4,
**dadurch gekennzeichnet, dass**
das zweites Umschaltventilmittel (38b) pneumatische Anschlüsse aufweist, von denen ein erster Anschluss (38b₁) mit einem pneumatischen Anschluss (34b₂) des zweites Notbremssteuerventilmittels (34b) verbunden ist, ein zweiter Anschluss (38b₂) in Wirkverbindung mit dem zumindest einen zweiten Druckluftbremszylinder (12) steht und ein dritter Anschluss (38b₃) mit dem Anschluss (37₃) des Notfallsteuerventilmittels (37) verbunden ist.

6. Bremssystem (6) nach einem der Ansprüche 3 bis 5,
**dadurch gekennzeichnet, dass**
das dritte Umschaltventilmittel (39) pneumatische Anschlüsse aufweist, von denen ein erster Anschluss (39₁) mit einem pneumatischen Anschluss (36₂) des Feststellbremsenlöseventilmittels (36) verbunden ist, ein zweiter Anschluss (39₂) in Wirkverbindung mit dem zumindest einen Feststellbremsenlösezylinder (14) steht ein dritter Anschluss (39₃) mit dem Anschluss (37₃) des Notfallsteuerventilmittels (37) verbunden ist.

7. Bremssystem (6) nach einem der Ansprüche 4 bis 6,
**gekennzeichnet, durch**
einen ersten Druckumsetzer (35a) mit einem pneumatischen Versorgungsanschluss (35a₁), der mit dem Bremsversorgungsbehälter (15) verbunden ist, mit einem Anschluss (35a₂), der mit dem zumindest einen ersten Druckluftbremszylinder (12) verbunden ist, und mit einem ersten pneumatischen Steueranschluss (35a₃), der mit dem zweiten pneumatischen Anschluss (38a₂) des ersten Umschaltventilmittels (38a) verbunden ist.

8. Bremssystem (6) nach einem der Ansprüche 3 bis 7,
**gekennzeichnet, durch**
einen zweiten Druckumsetzer (35b) mit einem pneumatischen Versorgungsanschluss (35b₁), der mit dem Bremsversorgungsbehälter (15) verbunden ist, mit einem Anschluss (35b₂), der mit dem zumindest einen ersten Druckluftbremszylinder (12) verbunden ist, und mit einem ersten pneumatischen Steueranschluss (35b₃), der mit dem zweiten pneumatischen Anschluss (38a₂) des ersten Umschaltventilmittels (38a) verbunden ist.

9. Bremssystem (6) nach Anspruch 8,
**gekennzeichnet, durch**
ein erstes Wechselventilmittel (40) mit einem ersten pneumatischen Eingang (40₁), einem zweiten pneumatischen Eingang (40₂) und einem pneumatischen Ausgang (40₃),
wobei der erste Eingang (40₁) mit dem Anschluss (35a₂) des ersten Druckumsetzers (35a) und der zweite Eingang (40₂) mit dem Anschluss (35b₂) des zweiten Druckumsetzers (35b) verbunden sind.

10. Bremssystem (6) nach Anspruch 9,
**gekennzeichnet, durch**
ein zweites Wechselventilmittel (41) mit einem ersten pneumatischen Eingang (41₁), einem zweiten pneumatischen Eingang (41₂) und einem pneumatischen Ausgang (41₃),
wobei der erste Eingang (41₁) mit dem Ausgang (40₃) des ersten Wechselventilmittels (40), der zweite Eingang (41₂) mit dem zweiten pneumatischen Anschluss (39₂) des dritten Umschaltventilmittels (39) und der Ausgang (41₃) mit dem zumindest einen Feststellbremsenlösezylinder (14) verbunden sind.

11. Bremssystem (6) nach einem der Ansprüche 1 bis 10
**gekennzeichnet, durch**
ein Notfalldrucksteuermodul (22) zur Steuerung des Druckes (ND) in der Notfallleitung und mit einem Aktivierungsventilmittel (25) zum Aktivieren des Notfalldrucksteuermoduls (22) .

12. Schienenfahrzeug (1),
**gekennzeichnet, durch**
ein Bremssystem (6) nach einem der Ansprüche 1 bis 11.

13. Verfahren zum Betrieb eines Bremssystems (6), welches mit einem ersten Notbremssteuerventilmittel (34a), einem in Wirkverbindung mit zumindest einem ersten Druckluftbremszylinder (12) stehenden ersten Notbremsströmungspfad (NBa) für vom ersten Notbremssteuerventilmittel (34a) ausgesteuerte Druckluft, einer Notfallleitung (NL) und einem ersten Umschaltventilmittel (38a), dessen pneumatischer Steueranschluss (38a₄) mit der Notfallleitung (NL) verbunden ist, bereitgestellt wird,
wobei die Notfallleitung (NL) bei einem Servicebetrieb des Bremssystems (6) drucklos (ND=0) gehalten wird und bei einem Notfallbetrieb des Bremssystems (6) ein Druck (ND≠0) in die Notfallleitung (NL) eingesteuert wird, so dass das ersten Umschaltventilmittel (38a) beim Servicebetrieb in einer ersten Stellung und beim Notfallbetrieb in einer zweiten Stellung gehalten wird,
**dadurch gekennzeichnet, dass**
das erste Umschaltventilmittel (38a) in seiner ersten Stellung den ersten Notbremsströmungspfad (NBa) freigibt und einen ersten Notfallströmungspfad (NFa) für von einem Notfallsteuerventilmittel (37) ausgesteuerte Druckluft sperrt und in seiner zweiten Stellung den ersten Notbremsströmungspfad (NBa sperrt und den ersten Notfallströmungspfad (NFa) freigibt.

14. Verfahren nach Anspruch 13
**dadurch gekennzeichnet, dass**
das Bremssystem (6) bereitgestellt wird mit einem zweiten Notbremssteuerventilmittel (34b) und einem zweiten Umschaltventilmittel (38b), dessen pneumatischer Steueranschluss (38b₄) mit der Notfallleitung (NL) verbunden ist, so dass es beim Servicebetrieb in einer ersten Stellung und beim Notfallbetrieb in einer zweiten Stellung gehalten wird,
wobei das zweite Umschaltventilmittel (38b) in seiner ersten Stellung einen in Wirkverbindung mit zumindest einem zweiten Druckluftbremszylinder (12) stehenden zweiten Notbremsströmungspfad (NBb) für vom zweiten Notbremssteuerventilmittel (34b) ausgesteuerte Druckluft freigibt und einen zweiten Notfallströmungspfad (NFb) für von dem Notfallsteuerventilmittel (37) ausgesteuerte Druckluft sperrt und in seiner zweiten Stellung den zweiten Notbremsströmungspfad (NBb) sperrt und den zweiten Notfallströmungspfad (NFb) freigibt.

15. Verfahren nach einem der Ansprüche 13 oder 14
**dadurch gekennzeichnet, dass**
das Bremssystem (6) bereitgestellt wird mit einem Feststellbremsenlöseventilmittel (36) und einem dritten Umschaltventilmittel (39), dessen Steueranschluss (39₄) mit der Notfallleitung (NL) verbunden ist, so dass es beim Servicebetrieb in einer ersten Stellung und beim Notfallbetrieb in einer zweiten Stellung gehalten wird,
wobei das dritte Umschaltventilmittel (39) in seiner ersten Stellung einen in Wirkverbindung mit einem Feststellbremsenlösezylinder (14) stehenden Feststellbremsenlöseströmungspfad (FBL) für vom Feststellbremsenlöseventilmittel (36) ausgesteuerte Druckluft freigibt und einen Notfalllöseströmungspfad (NFL) für von dem Notfallsteuerventilmittel (37) ausgesteuerte Druckluft sperrt und in seiner zweiten Stellung den Feststellbremsenlöseströmungspfad (FBL) sperrt und den Notfalllöseströmungspfad (NFL) freigibt.

## Claims

1. Brake system (6) with a first emergency brake control valve means (34a), a first emergency brake flow path (NBa) which is operatively connected to at least one compressed-air brake cylinder (12) for compressed air applied by the first emergency brake control valve means (34a), an emergency line (NL) and a switch-over valve means (38a), of which the pneumatic control connection (38a₄) is connected to the emergency line (NL),
wherein the emergency line (NL), in service operating mode of the brake system (6), is kept at zero pressure (ND=0) and in emergency operating mode of the brake system (6), a pressure (ND≠0) is applied to the emergency line (NL), so that the first switch-over valve means (38a) is kept in a first position in a service operating mode and is kept in a second position in an emergency operating mode,
**characterised in that**
the first switch-over valve means (38a) is embodied such that, in its first position, the first emergency brake flow path (NBa) is cleared and a first emergency flow path (NFa) for compressed air applied by an emergency control valve means (37) is blocked and that, in its second position, the first emergency brake flow path (NBa) is blocked and the first emergency flow path (NFa) is cleared.

2. Brake system according to claim 1,
**characterised by**
a second emergency brake control valve means (34b) and a second switch-over valve means (38b), the pneumatic control connection (38b₄) of which is connected to the emergency line (NL), so that, in service operating mode it is kept in a first position and in emergency operating mode it is kept in a second position.
wherein the second switch-over valve means (38b) is embodied such that, in its first position, an emergency brake flow path (NBb) having an operative connection to at least one second compressed-air brake cylinder (12) is cleared for compressed air applied by the second emergency brake control valve means (34b) and a second emergency flow path (NFb) is blocked for compressed air applied by the emergency control valve means (37) and that, in its second position, the second emergency brake flow path (NBb) is blocked and the second emergency flow path (NFb) is cleared.

3. Brake system (6) according to claim 1 or 2,
**characterised by**
a parking brake actuation valve means (36) and a third switch-over valve means (39), the pneumatic control connection (39₄) of which is connected to the emergency line (NL), so that, during service operating mode it is kept in a first position and during emergency operating mode it is kept in a second position,
wherein the third switch-over valve means (39) is embodied such that, in its first position, a parking brake actuation flow path (FBL) having an operative connection to at least one parking brake actuation cylinder (14) is cleared for compressed air applied by the parking brake actuation valve means (36) and an emergency actuation flow path (NFL) is blocked for compressed air applied by the emergency control valve means (37) and that, in its second position, the parking brake actuation flow path is blocked and the third emergency actuation flow path is cleared.

4. Brake system (6) according to claim 1 to 3,
**characterised in that**
the first switch-over valve means (38a) has pneumatic connections, of which a first connection (38a₁) is connected to a pneumatic connection (34a₂) of the first emergency brake control valve means (34a) and a second connection (38a₂) has an operative connection to the at least one first compressed-air brake cylinder (12), and that the emergency control valve means (37) has a pneumatic control connection (37₁) connected to the emergency line (NL), a pneumatic supply connection (37₂) connected to a brake supply reservoir (15) and a pneumatic connection (37₃) connected to a third connection (38a₃) of the first switch-over valve means (38a).

5. Brake system (6) according to one of claims 2 to 4,
**characterised in that**
the second switch-over valve means (38b) has pneumatic connections, of which a first connection (38b₁) is connected to a pneumatic connection (34b₂) of the second emergency brake control valve means (34b), a second connection (38b₂) has an operative connection to the at least one second compressed-air brake cylinder (12) and a third connection (38b₃) is connected to the connection (37₃) of the emergency control valve means (37).

6. Brake system (6) according to one of claims 3 to 5,
**characterised in that**
the third switch-over valve means (39) has pneumatic connections, of which a first connection (39₁) is connected to a pneumatic connection (36₂) of the parking brake actuation valve means (36), a second connection (39₂) has an operative connection to the at least one parking brake actuation cylinder (14) and a third connection (39₃) is connected to the connection (37₃) of the emergency control valve means (37).

7. Brake system (6) according to one of claims 4 to 6,
**characterised by**
a first pressure converter (35a) with a pneumatic supply connection (35a₁), which is connected to the brake supply reservoir (15), with a connection (35a₂), which is connected to the at least one first compressed-air brake cylinder (12), and with a first pneumatic control connection (35a₃), which is connected to the second pneumatic control connection (38a₂) of the first switch-over valve means (38a).

8. Brake system (6) according to one of claims 3 to 7,
**characterised by**
a second pressure converter (35b) with a pneumatic supply connection (35b₁), which is connected to the brake supply reservoir (15), with a connection (35b₂), which is connected to the at least one first compressed-air brake cylinder (12), and with a first pneumatic control connection (35b₃), which is connected to the second pneumatic control connection (38b₂) of the first switch-over valve means (38a) .

9. Brake system (6) according to claim 8
**characterised by**
a first changeover valve means (40) with a first pneumatic input (40₁), a second pneumatic input (40₂) and a pneumatic output (40₃),
where the first input (40₁) is connected to the connection (35a₂) of the first pressure converter (35a) and the second input (40₂) is connected to the connection (35b₂) of the first pressure converter (35b).

10. Brake system (6) according to claim 9,
**characterised by**
a second changeover valve means (41) with a first pneumatic input (41₁), a second pneumatic input (41₂) and a pneumatic output (41₃),
where the first input (41₁) is connected to the output (40₃) of the first changeover valve means (40), the second input (41₂) is connected to the second pneumatic connection (39a) of the third switch-over valve means (39) and the output (41₃) is connected to the at least one parking brake actuation cylinder (14).

11. Brake system according to one of claims 1 to 10,
**characterised by**
an emergency pressure control module (22) for controlling the pressure (ND) in the emergency line (ND) and with an activation valve means for activating the emergency pressure control module (22).

12. Rail vehicle (1),
**characterised by**
a brake system (6) according to one of claims 1 to 11.

13. Method for operating a brake system (6), which is provided with first emergency brake control valve means (34a), a first emergency brake flow path (NBa) which is operatively connected to at least one compressed-air brake cylinder (12) for compressed air applied by the first emergency brake control valve means (34a), an emergency line (NL) and a switch-over valve means (38a), of which the pneumatic control connection (38a₄) is connected to the emergency line (NL),
wherein the emergency line (NL), in a service operating mode of the brake system (6), is kept at zero pressure (ND=0) an in an emergency operating mode of the brake system (6), a pressure (ND≠0) is applied to the emergency line (NL), so that the first switch-over valve means (38a) is kept in a first position in service operating mode and is kept in a second position in emergency operating mode,
**characterised in that**
the first switch-over valve means (38a), in its first position, clears the first emergency brake flow path (NBa) and blocks a first emergency flow path (NFa) for compressed air applied by an emergency control valve means (37) and that, in its second position, blocks the first emergency brake flow path (NBa) and clears the first emergency flow path (NFa).

14. Method according to claim 13,
**characterised in that**
the brake system (6) is provided with a second emergency brake control valve means (34b) and a second switch-over valve means (38b), the pneumatic control connection (38b₄) of which is connected to the emergency line (NL) so that during service operating mode it is kept in a first position and during emergency operating mode it is kept in a second position,
wherein the second switch-over valve means (38b), in its first position, clears a second emergency brake flow path (NBd) operatively connected to at least one second compressed-air brake cylinder (12) for compressed air applied by the second emergency brake control valve means (34b) and blocks a second emergency flow path (NFb) for compressed air applied by the control valve means (37) and, in its second position, blocks the second emergency brake flow path (NBb) and clears the second emergency flow path (NFb) .

15. Method according to one of claims 13 or 14,
**characterised in that**
the brake system (6) is provided with a parking brake actuation valve means (36) and a third switch-over valve means (39), the control connection (39₄) of which is connected to the emergency line (NL), so that during service operating mode it is kept in a first position and during emergency operating mode in a second position, wherein the third switch-over valve means (39), in its first position, clears a parking brake actuation flow path (FBL) which is operatively connected to a parking brake actuation cylinder (14) for compressed air applied by the parking brake actuation valve means (36) and blocks an emergency actuation flow path (NFL) for compressed air applied by the emergency control valve means (37) and, in its second position, blocks the parking brake actuation flow path (FBL) and clears the emergency actuation flow path (NFL).

## Revendications

1. Système (6) de frein, comprenant un premier moyen (34a) de soupape de commande de frein d'urgence, un premier trajet (NBa) d'écoulement de frein d'urgence, en liaison active avec au moins un premier cylindre (12) de frein à air comprimé pour de l'air comprimé commandé par le premier moyen (34a) de soupape de commande de frein d'urgence, un conduit (NL) en cas d'urgence et un premier moyen (38a) de soupape d'inversion, dont le raccord (38a₄) de commande pneumatique est relié à la ligne (NL) en cas d'urgence,
dans lequel la ligne (NL) en cas d'urgence est, dans un fonctionnement en service du système (6) de freinage, maintenue sans pression (ND=0), et dans un fonctionnement en cas d'urgence du système (6) de freinage, une pression (ND≠0) est appliquée dans le conduit (NL) en cas d'urgence, de manière à ce que le premier moyen (38a) de soupape d'inversion soit maintenu dans le fonctionnement de service dans une première position et dans le fonctionnement en cas d'urgence dans une deuxième position, **caractérisé en ce que** le premier moyen (38a) de soupape d'inversion est constitué de manière, dans sa première position, à dégager le premier trajet (NBa) d'écoulement de frein d'urgence et à interrompre le trajet (NFa) d'écoulement en cas d'urgence pour de l'air comprimé commandé par un moyen (37) de soupape de commande en cas d'urgence et, dans sa deuxième position, à interrompre le premier trajet d'écoulement de frein d'urgence et à dégager le premier trajet (NFa) d'écoulement en cas d'urgence.

2. Système (6) de freinage suivant la revendication 1,
**caractérisé par**
un deuxième moyen (34b) de soupape de commande de frein d'urgence et un deuxième moyen (38b) de soupape d'inversion, dont le raccord (38b₄) pneumatique est relié au conduit (NL) en cas d'urgence, de manière à le maintenir, dans le fonctionnement de service, dans une première position, et dans le fonctionnement en cas d'urgence, dans une deuxième position,
le deuxième moyen (38b) de soupape d'inversion étant constitué de manière, dans sa première position, à dégager un deuxième trajet (NBb) d'écoulement de frein d'urgence en liaison active avec au moins un deuxième cylindre (12) de frein à air comprimé pour de l'air comprimé commandé par le deuxième moyen (34b) de soupape de commande de frein d'urgence, et à interrompre un deuxième trajet (NFb) d'écoulement en cas d'urgence pour de l'air comprimé commandé par le moyen (37) de soupape de commande en cas d'urgence et, dans sa deuxième position, à interrompre le deuxième trajet (NBb) d'écoulement de frein d'urgence et à dégager le deuxième trajet (NFb) d'écoulement en cas d'urgence.

3. Système (6) de freinage suivant l'une des revendications 1 ou 2,
**caractérisé par**
un moyen (36) de soupape de desserrage de frein de stationnement et un troisième moyen (39) de soupape d'inversion, dont le raccord (39₄) de commande pneumatique est relié à la ligne (NL) en cas d'urgence, de manière à être maintenu, dans le fonctionnement de service, dans une première position, et dans le fonctionnement en cas d'urgence, dans une deuxième position,
dans lequel le troisième moyen (39) de soupape d'inversion est constitué de manière, dans sa première position, à dégager un trajet (FBL) d'écoulement de desserrage de frein de stationnement en liaison active avec au moins un cylindre (14) de desserrage de frein de stationnement pour de l'air comprimé commandé par le moyen (36) de soupape de desserrage de frein de stationnement, et à interrompre un trajet (NFL) d'écoulement de desserrage en cas d'urgence pour de l'air comprimé commandé par le moyen (37) de soupape de commande en cas d'urgence, et dans sa deuxième position, à interrompre le trajet d'écoulement de desserrage de frein de stationnement et à dégager le troisième trajet d'écoulement de desserrage en cas d'urgence.

4. Système (6) de freinage suivant l'une des revendications 1 à 3,
**caractérisé en ce que**
le premier moyen (38a) de soupape d'inversion a des raccords pneumatiques, dont un premier raccord (38a₁) est relié à un raccord (34a₂) pneumatique du premier moyen (34a) de soupape de commande de frein d'urgence et un deuxième raccord (38a₂) est en liaison active avec le au moins un premier cylindre (12) de frein à air comprimé, et **en ce que** le moyen (37) de soupape de commande en cas d'urgence a un raccord (37₁) de commande pneumatique, relié à la ligne (NL) en cas d'urgence, un raccord (37₂) d'alimentation pneumatique, relié à un récipient (15) d'alimentation du frein, et un raccord (37₃) pneumatique, relié à un troisième raccord (38a₃) du premier moyen (38a) de soupape d'inversion.

5. Système (6) de freinage suivant l'une des revendications 2 à 4,
**caractérisé en ce que**
le deuxième moyen (38b) de soupape d'inversion a des raccords pneumatiques, dont un premier raccord (38b₁) est relié à un raccord (34b₂) pneumatique du deuxième moyen (34b) de soupape de commande de frein d'urgence, un deuxième raccord (38b₂) est en liaison active avec le au moins un deuxième cylindre (12) de frein à air comprimé, et un troisième raccord (38b₃) est relié au raccord (37₃) du moyen (37) de soupape de commande en cas d'urgence.

6. Système (6) de freinage suivant l'une des revendications 3 à 5,
**caractérisé en ce que**
le troisième moyen (39) de soupape d'inversion a des raccords pneumatiques, dont un premier raccord (39₁) est relié à un raccord (36₂) pneumatique du moyen (36) de soupape de desserrage de frein de stationnement, un deuxième raccord (39₂) est en liaison active avec le au moins un cylindre (14) de desserrage de frein de stationnement, et un troisième raccord (39₃) est relié au raccord (37₃) du moyen (37) de soupape de commande en cas d'urgence.

7. Système (6) de freinage suivant l'une des revendications 4 à 6,
**caractérisé par**
un premier convertisseur (35a) de pression, ayant un raccord (35a₁) d'alimentation pneumatique, qui est relié au récipient (15) d'alimentation du frein, un raccord (35a₂), qui est relié au au moins un premier cylindre (12) de frein à air comprimé, et un premier raccord (35a₃) de commande pneumatique, qui est relié au deuxième raccord ((38a₂) pneumatique du premier moyen (38a) de soupape d'inversion.

8. Système (6) de freinage suivant l'une des revendications 3 à 7,
**caractérisé par**
un deuxième convertisseur (35b) de pression, ayant un raccord (35b₁) d'alimentation pneumatique, qui est relié au récipient (15) d'alimentation du frein, un raccord (35b₂), qui est relié au au moins un premier cylindre (12) de frein à air comprimé, et un premier raccord (35b₃) de commande pneumatique, qui est relié au deuxième raccord (38a₂) pneumatique du premier moyen (38a) de soupape d'inversion.

9. Système (6) de freinage suivant la revendication 8,
**caractérisé par**
un premier moyen (40) de soupape à deux voies, ayant une première entrée (40₁) pneumatique, une deuxième entrée (40₂) pneumatique et une sortie (40₃) pneumatique,
la première entrée (40₁) étant reliée au raccord (35a₂) du premier convertisseur (35a) de pression et la deuxième entrée (40₂) au raccord (35b₂) du deuxième convertisseur (35b) de pression.

10. Système (6) de freinage suivant la revendication 9,
**caractérisé par**
un deuxième moyen (41) de soupape à deux voies, ayant une première entrée (41₁) pneumatique, une deuxième entrée (41₂) pneumatique et une sortie (41₃) pneumatique,
la première entrée (41₁) étant reliée à la sortie (40₃) du premier moyen (40) de soupape à deux voies, la deuxième entrée (41₂) au deuxième raccord (39₂) pneumatique du troisième moyen (39) de soupape à deux voies, et la sortie (41₃) au au moins un cylindre (14) de desserrage de frein de stationnement.

11. Système (6) de freinage suivant l'une des revendications 1 à 10,
**caractérisé par**
un module (22) de commande de pression en cas d'urgence pour commander la pression (ND) dans la ligne en cas d'urgence et comprenant un moyen (25) de soupape d'activation pour activer le module (22) de commande de pression en cas d'urgence.

12. Véhicule (1) ferroviaire,
**caractérisé par**
un système (6) de freinage suivant l'une des revendications 1 à 11.

13. Procédé pour faire fonctionner un système (6) de freinage, qui est mis à dispositif en ayant un premier moyen (34a) de soupape de commande de frein d'urgence, un premier trajet (NBa) d'écoulement de frein d'urgence, en liaison active avec au moins un premier cylindre (12) de frein à air comprimé pour de l'air comprimé commandé par le premier moyen (34a) de soupape de commande de frein d'urgence, un conduit (NL) en cas d'urgence et un premier moyen (38a) de soupape d'inversion, dont le raccord (38a₄) de commande pneumatique est relié à la ligne (NL) en cas d'urgence,
dans lequel la ligne (NL) en cas d'urgence est, dans un fonctionnement en service du système (6) de freinage, maintenu sans pression (ND=0), et dans un fonctionnement en cas d'urgence du système (6) de freinage, une pression (ND≠0) est appliquée dans le conduit (NL) en cas d'urgence, de manière à ce que le premier moyen (38a) de soupape d'inversion soit maintenu dans le fonctionnement de service dans une première et dans le fonctionnement en cas d'urgence dans une deuxième position,
**caractérisé en ce que**
le premier moyen (38a) de soupape d'inversion, dans sa première position, dégage le premier trajet (NBa) d'écoulement de frein d'urgence et interrompt un premier trajet (NFa) d'écoulement en cas d'urgence pour de l'air comprimé commandé par un moyen (37) de soupape de commande en cas d'urgence et, dans sa deuxième position, interrompt le premier trajet (NBa) d'écoulement de frein d'urgence et dégage le premier trajet (NFa) d'écoulement en cas d'ugence.

14. Procédé suivant la revendication 13,
**caractérisé en ce que**
l'on met à disposition le système (6) de freinage, ayant un deuxième moyen (34b) de soupape de commande de frein d'urgence et un deuxième moyen (38b) de soupape d'inversion, dont le raccord (38b₄) pneumatique est relié au conduit (NL) en cas d'urgence, de manière à le maintenir, dans le fonctionnement de service, dans une première position, et dans le fonctionnement en cas d'urgence, dans une deuxième position,
dans lequel le deuxième moyen (38b) de soupape d'inversion, dans sa première position, dégage un deuxième trajet (NBb) d'écoulement de frein d'urgence en liaison active avec au moins un deuxième cylindre (12) de frein à air comprimé pour de l'air comprimé commandé par le deuxième moyen (34b) de soupape de commande de frein d'urgence, et interrompt un deuxième trajet (NFb) d'écoulement en cas d'urgence pour de l'air comprimé commandé par le moyen (37) de soupape de commande en cas d'urgence et, dans sa deuxième position, interrompt le deuxième trajet (NBb) de frein d'urgence et dégage le deuxième trajet (NFb) d'écoulement en cas d'urgence.

15. Procédé suivant l'une des revendications 13 ou 14,
**caractérisé en ce que**
l'on met à disposition le système (6) de freinage, ayant un moyen (36) de soupape de desserrage de frein de stationnement et un troisième moyen (39) de soupape d'inversion, dont le raccord (39₄) de commande pneumatique est relié à la ligne (NL) en cas d'urgence, de manière à être maintenu, dans le fonctionnement de service, dans une première position, et dans le fonctionnement en cas d'urgence, dans une deuxième position,
dans lequel le troisième moyen (39) de soupape d'inversion, dans sa première position, dégage un trajet (FBL) d'écoulement de desserrage de frein de stationnement en liaison active avec un cylindre (14) de desserrage de frein de stationnement pour de l'air comprimé commandé par le moyen (36) de soupape de desserrage de frein de stationnement et interrompt un trajet (NFL) d'écoulement de desserrage en cas d'urgence pour de l'air comprimé commandé par le moyen (37) de soupape de commande en cas d'urgence et, dans sa deuxième position, interrompt le trajet (FBL) d'écoulement de desserrage de frein de stationnement et dégage le trajet (NFL) d'écoulement de desserrage en cas d'urgence.
